# EUROPEAN PATENT APPLICATION

(11) **EP 4 653 122 A1**
(43) Date of publication of application: **26.11.2025**
(21) Application number: 24382552.8
(22) Date of filing: 24.05.2024
(51) Int. Cl.: B23K 26/03, A24C 5/00, B23K 26/08, B23K 26/382, B23K 26/70, G01J 1/42, G01N 21/894, A61F 9/008, B23K 101/16, B23K 103/00

(54) **CALIBRATION METHOD OF A WEB MICRO-PERFORATING LASER UNIT**

(71) Applicant: COMEXI GROUP INDUSTRIES, SAU, 17457 Riudellots de la Selva, Girona (ES)
(72) Inventor: ARGILÉS LLORENS, Jordi, 17002 Girona (ES)
(74) Representative: Torner, Juncosa I Associats, SL

(57) **Abstract**

Calibration method of a web micro-perforating laser unit by estimating, for each laser source (11) of the laser unit (10), different estimated pulse times required to produce calibration micro-perforations (21) of increasing diameters smaller and larger than a predefined target micro-perforation diameter (60); emitting laser beams with each laser source (11) using the estimated pulse times to create at least one calibration pattern (20) of calibration micro-perforations (21) of different diameters; measuring the real micro-perforation diameter of each calibration micro-perforation (21) on a digital image (41) obtained from each calibration pattern (20); defining, within a virtual space (50), reference points (51) representing a real micro-perforation diameter (RD) and the respective pulse time (PT) and calculate a trendline (52) form said reference points (51); and calculating which point of the trendline (52) produces the target micro-perforation diameter (60), obtaining an optimal pulse time (61) to produce the target micro-perforation diameter (60).

## Description

### Technical field

The present invention is directed towards a calibration method of a web micro-perforating laser unit, i.e. a method intended to calibrate the pulse time of each laser source included in a laser unit to perform micro-perforations of a certain predefined target diameter in a web substrate, typically a plastic web substrate.

### Background of the Invention

Web micro-perforating laser units including several laser sources are known in the art, for example through document EP0881024.

Inspection of the micro-perforations produced by the laser sources on the web using a digital camera, including the inspection of the diameter of the micro-perforations produces, is also known, for example through document EP1857812, which describes a system where the digital camera obtains images of the micro-perforations, such images are analyzed and an alarm is triggered when the properties, such the diameter, of the micro-perforations is not according to a predefined parameters.

The calibration of a laser source through the analysis of digital images obtained from a micr-perforation performed by a laser source on a surface is also known through document WO2005094468.

Despite the above, none of the preceding documents describes a method to obtain a simultaneous calibration of multiple laser sources in a fast and efficient manner, spending little material.

### Description of the Invention

The present invention concerns to a calibration method of a web micro-perforating laser unit, as defined in claim 1.

The proposed method comprises:
estimating, for each laser source of the laser unit, different estimated pulse times of a laser beam emitted by said laser source required to obtain calibration micro-perforations of increasing diameters some smaller and some larger than a predefined target micro-perforation diameter, the estimation being obtained considering a known power of each laser source and known laser perforation behaviour properties of a web to be micro-perforated,
emitting, during a calibration phase, laser beams with each laser source using the estimated pulse times to create at least one calibration pattern of calibration micro-perforations with each laser source on a web conveyed through the laser unit;
obtaining, by at least one digital camera, a digital image of each calibration pattern and measuring the real micro-perforation diameter of each calibration micro-perforation on said digital image;
defining, within a virtual space, reference points each representing a real micro-perforation diameter of one micro-perforation of the calibration pattern and the respective pulse time used on the creation thereof;
calculating, for each calibration pattern, a trendline defined by the correlation between said reference points within the virtual space;
calculating, for each laser source, which point of the corresponding trendline produces the target micro-perforation diameter, obtaining an optimal pulse time from said point of the trendline required to produce micro-perforations with the target micro-perforation diameter;
operating, during a production phase, each laser source of the laser unit with the respective optimal pulse time to create micro-perforations on a web conveyed through the laser unit according to a predefined production pattern.

The laser unit comprises several laser sources, and the web is conveyed in front of said laser sources in a longitudinal direction to perform micro-perforations of a predefined target diameter therein. Typically, the laser sources are arranged in a succession transversal to the longitudinal direction, each laser source facing one transversal region of the web.

In the initial step, knowing the predefined target micro-perforation diameter, the power of each laser source and considering different laser perforation behaviour properties of the web to be micro-perforated, different estimated pulse times of each laser source of the laser unit are estimated, to obtain several micro-perforations of different diameters, some bigger and some smaller than the pre-defined target micro-perforation diameter with each laser source.

The laser perforation behaviour properties of the web can include, for example, thickness, material composition, melting temperature, burning temperature, transparency, and/or empirical data of micro-perforation diameters obtained under a laser beam with different pulse times or with different pulse times and different power, on a web equivalent to the web to be micro-perforated, i.e. with equal or similar laser perforation behaviour properties, such material composition, thickness and/or transparency.

The different estimated pulse times can be calculated for example selecting one pulse time which, according to the stored properties of the web, will theoretically produce a micro-perforation with a diameter close to the target micro-perforation diameter, and then creating additional estimated pulse times by lengthening and shortening the pulse time at predefined intervals.

The pulse time which, according to the stored properties of the web, will theoretically produce a micro-perforation with a diameter close to the target micro-perforation diameter can be obtained from the stored empirical data or can be calculated, for example, calculating the energy delivered by the laser source of known power during the pulse time on the web and by calculating the resulting micro-perforation considering the material composition, thickness, melting temperature, burning temperature, transparency or other relevant properties of the web.

Alternatively, the pulse time which will theoretically produce a micro-perforation with a diameter close to the target micro-perforation diameter can be manually set by an operator or obtained from a predefined table or formula relating material type, material thickness, laser power and laser beam pulse time.

Once the different estimated pulse times of each laser source have been determined, the web is conveyed in front of the laser sources of the laser unit, and each individual laser source is operated to create at least one calibration pattern of micro-perforations with each laser source, each calibration pattern including several micro-perforations each performed with one of the different estimated pulse times and therefore resulting in micro-perforations with different diameters, some bigger and some smaller to the target micro-perforation diameter.

Then, a digital camera obtains a digital image of each calibration pattern, and the digital image is analyzed to determine the real micro-perforation diameter of each micro-perforation contained in each calibration pattern.

This measurement of the real micro-perforation diameters can be obtained, for example, by counting pixels of the micro-perforation on the digital image, or by comparing the micro-perforations of the digital image with stored reference images of micro-perforations with a known diameter.

Each micro-perforation captured in a digital image is associated with the pulse time of the laser source required for its formation. This association can generate a reference point in a virtual space.

All the reference points of the same calibration pattern are integrated in the same virtual space, typically a bidimensional cartesian virtual space where one axis corresponds to the pulse time of the laser source and the other orthogonal axis corresponds to the real micro-perforation diameter measured from the digital image, producing a scatter graph.

The position of the reference points on the virtual space allows the calculation of a trendline, also known as a line of best fit, which is a straight line.

The trendline can be obtained using an equation determined by established best-fit procedures such a linear regression, which guarantee the generation of a correct solution in a finite time.

The virtual space where the reference points and the trendline are defined can be a mathematical virtual space.

Once the trendline has been defined in said virtual space, the optimal pulse time required to obtain the target micro-perforation diameter can be calculated for each laser source of the laser unit locating the point where the trendline has the target micro-perforation diameter, automatically providing the optimal pulse time on said point.

Once the optimal pulse time has been obtained for each laser source, the laser unit can be operated in a production phase, continuously moving the web in the longitudinal direction in front of the laser sources of the laser unit while each of those laser sources is operated to create a production pattern of micro-perforations of the target micro-perforation diameter using for each laser source the optimal pulse time calculated during the calibration phase.

### Brief description of the Figures

The foregoing and other advantages and features will be more fully understood from the following detailed description of an embodiment with reference to the accompanying drawings, to be taken in an illustrative and non-limitative manner, in which:
Fig. 1 is a schematic top view of a laser unit, including four laser sources and four cameras each camera facing the calibration patterns produced by one laser source, on top of a web moved in the longitudinal direction in front of the four laser sources and four cameras;
Fig. 2 is a schematic top view of a laser unit similar to the embodiment shown in Fig. 1, but including four laser sources and a single camera movable in a transversal direction to face the calibration pattern produced by any of the laser sources;
Fig. 3 shows a schematic representation of the virtual space as a bidimensional cartesian space where the vertical axis corresponds to the diameter of the micro-perforations and where the horizontal axis corresponds to the pulse time required to obtain the micro-perforations.

### Detailed Description of the Invention and of particular embodiments

The present invention proposes a calibration method of a web micro-perforating laser unit.

The proposed method comprises, according to a non-limitative preferred embodiment, the following steps:
First, different estimated pulse times, required to obtain with each laser source 11 calibration micro-perforations 21 of increasing diameters, are estimated for each laser source 11 of the laser unit 10. The estimation is obtained considering a known laser power of each laser source 11 and known properties of a web 30 to be micro-perforated, such the melting and burning temperature, the thickness, transparency, composition of the web, etc, which allow an estimation of the perforation behaviour of the web under a laser beam of a given power during a given pulse time.

The estimation is adapted to obtain a range of different estimated pulse times adapted to obtain some micro-perforations smaller and some larger than a predefined target micro-perforation diameter 60.

Preferably, the different estimated pulse times are selected to obtain micro-perforations with a diameter in a range up to ±25% or ±50% of the target micro-perforation diameter to ensure that the target micro-perforation is within that wide range despite any significant deviation of the envisaged behaviour of the web under the laser beam and the real behaviour thereof.

Then, during a calibration phase, each laser source 11 is operated with the estimated pulse times calculated before to create, on with each laser source 11 on the web 30 conveyed through the laser unit 10 in a longitudinal direction LD, at least one calibration pattern 20 of calibration micro-perforations 21. According to the preferred embodiment the calibration pattern 20 is a matrix of at least nine, or at least twelve, micro-perforations.

Then, at least one digital camera 40 obtains a digital image 41 of each calibration pattern 20 of the web 30. The real micro-perforation diameter RD of each calibration micro-perforation 21 is measured automatically on said digital image 41, for example by counting pixels on the digital image or comparing the digital image with a reference image with micro-perforations of known diameter.

Once the real diameter of the micro-perforations has been measured, reference points 51 are defined within a virtual space 50. Each reference point 51 is placed in the virtual space 50 in coordinates defined by the real micro-perforation diameter RD and the respective pulse time PT used on the creation of such micro-perforation.

Then, for each calibration pattern 20, a trendline 52 is calculated from the position of the reference points 51 within the virtual space 50.

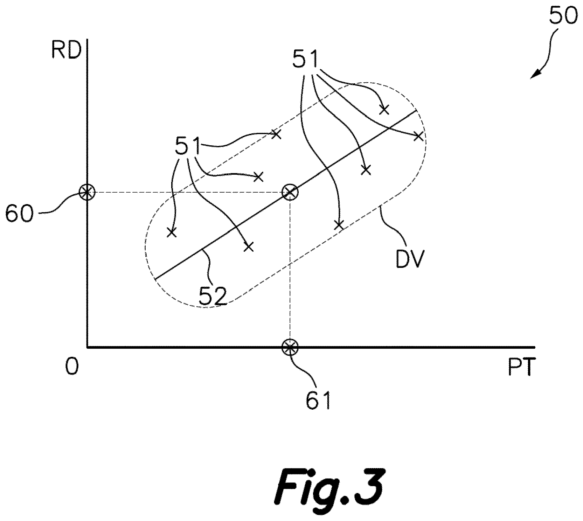

Once the trendline 52 has been stablished, an optimal pulse time 61 to produce a micro-perforation with the target micro-perforation diameter 60 can be easily calculated for each laser source 11 using the trendline 52 of the at least one calibration pattern 20 created by said laser source 11, because the intersection between the trendline 52 and the line of points of the virtual space corresponding to the target micro-perforation diameter 60 defines a single optimal pulse time 61, as shown in Fig. 3.

Finally, a production phase can start, where each laser source 11 of the laser unit 10 can be operated with the respective optimal pulse time 61 to create micro-perforations on the web 30 conveyed through the laser unit 10 according to a predefined production pattern.

According to a preferred embodiment, the method can further comprise calculating, for each calibration pattern 20, a dispersion value of the reference points 51 regarding the trendline 52. This is a well-known calculation commonly used on the scatter graphs such the one defined in the virtual space and shown in Fig. 3.

Knowing the dispersion value of the reference points 51 permits to use, for calculating the optimal pulse time 61, only the trendline 52 of the calibration patterns 20 with a dispersion value within a predefined range of admissible dispersion values DV. Any calibration pattern 20 which micro-perforations produce reference points outside the predefined range of admissible dispersion values DV is dismissed.

Preferably, during the calibration phase, each laser source 11 produces successive calibration patterns 20 until one of the calibration patterns 20 produced by each laser source 11 has a dispersion value within the predefined range of admissible dispersion values DV. In this manner, the minimal number of calibration patterns can be produced, reducing the material waste and the calibration time.

The calibration phase ends preferably when all the laser sources 11 have produced one calibration pattern 20 with a dispersion value within the predefined range of admissible dispersion values DV.

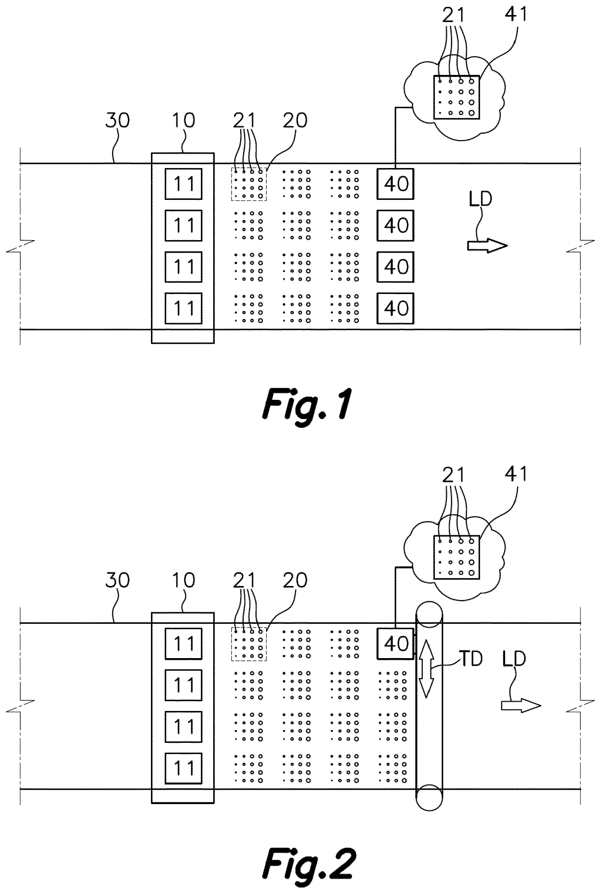

According to an additional embodiment, shown in Fig. 2, the obtention of the digital images 41 of the calibration patterns 20 comprises moving a single digital camera 40 in a transverse direction TD transversal to the web 30 and capturing sequential digital images 41 of calibration patterns 20 created by different laser sources 11 in different transversal regions of the web 30.

This movement of the camera is automatic using a conveying device controlled to precisely move the camera in a fast manner. Typically said conveying device can include a guided carriage supporting the digital camera and an actuator connected to said carriage to move the carriage along a transversal guide. The actuator can include, for example, a closed loop band connected to the carriage producing its movement along the transversal guide when actuated, as shown in Fig. 2.

This solution slightly increases the calibration time but greatly reduces the cost of the device, reducing the number of digital cameras to only one.

The number of laser sources of the laser unit can be any number above two laser sources.

The calibration pattern 20 is preferably contained in a surface area of the web smaller than 100 mm² or smaller than 50 mm².

## Claims

1. Calibration method of a web micro-perforating laser unit, wherein the laser unit comprises several pulsant laser sources the method comprising:
estimating, for each laser source (11) of the laser unit (10), different estimated pulse times of a laser beam emitted by said laser source (11) required to produce on a web calibration micro-perforations (21) of increasing diameters some smaller and some larger than a predefined target micro-perforation diameter (60), the estimation being obtained considering a known laser power of each laser source (11) and known laser perforation behaviour properties of a web (30) to be micro-perforated;
emitting, during a calibration phase, laser beams with each laser source (11) using the estimated pulse times to create at least one calibration pattern (20) of calibration micro-perforations (21) of different diameters on the web (30) conveyed through the laser unit (10) in a longitudinal direction (LD);
obtaining, by at least one digital camera (40), a digital image (41) of each calibration pattern (20) and measuring the real micro-perforation diameter of each calibration micro-perforation (21) on said digital image (41);
defining, within a virtual space (50), reference points (51) each representing a real micro-perforation diameter (RD) of one micro-perforation (21) of the calibration pattern (20) and the respective pulse time (PT) used on the creation thereof;
calculating, for each calibration pattern (20), a trendline (52) defined by the correlation between said reference points (51) within the virtual space (50);
calculating, for each laser source (11), which point of the corresponding trendline (52) produces the target micro-perforation diameter (60), obtaining an optimal pulse time (61) from said point of the trendline (52) required to produce micro-perforations with the target micro-perforation diameter (60);
operating, during a production phase, each laser source (11) of the laser unit (10) with the respective optimal pulse time (61) to create micro-perforations on the web (30) conveyed through the laser unit (11) according to a predefined production pattern.

2. The calibration method according to claim 1 wherein the method further comprises calculating, for each calibration pattern (20), a dispersion value of the reference points (51) regarding the trendline (52) and using, for calculating the optimal pulse time (61), only the trendline (52) of the calibration patterns (20) with a dispersion value within a predefined range of admissible dispersion values (DV).

3. The calibration method according to claim 2 wherein during the calibration phase each laser source (11) produces successive calibration patterns (20) until one of the calibration patterns (20) produced by each laser source (11) has a dispersion value within the predefined range of admissible dispersion values (DV).

4. The calibration method according to claim 3 wherein the calibration phase ends when all the laser sources (11) have produced one calibration pattern (20) with a dispersion value within the predefined range of admissible dispersion values (DV).

5. The calibration method according to any preceding claim wherein the obtention of the digital images (41) of the calibration patterns (20) comprises moving a single digital camera (40) in a transverse direction (TD) transversal to the web (30) and capturing sequential digital images (41) of calibration patterns (20) created by different laser sources (11) in different transversal regions of the web (30).

6. The calibration method according to any preceding claim wherein the optimal pulse time (61) of each laser source (11) is adjusted along time according to a stored expected power decay of the respective laser source (11), considering an accumulated use time of each individual laser source (11).

7. The calibration method according to any preceding claim wherein, during the production phase, the method further comprises obtaining, by the at least one digital camera (40), digital images (41) of the micro-perforations obtained from each laser source (11), measuring the real micro-perforation diameter of each micro-perforation and adjusting the optimal pulse time (61) of each laser source (11) when deviations are detected between the real micro-perforation diameter and the target micro-perforation diameter (60).

8. The calibration method according to any preceding claim wherein the measuring the real micro-perforation diameter is obtained by counting pixels of the digital image (41).

9. The calibration method according to any preceding claim wherein the calibration pattern (20) is contained in a surface area smaller than 100 mm² or smaller than 50 mm².

10. The calibration method according to any preceding claim wherein the laser perforation behaviour properties of the web considered to estimate the different estimated pulse times include web thickness, material composition of the web, melting temperature, burning temperature, transparency, and/or empirical data of micro-perforation diameters obtained under a laser beam with different pulse times or with different pulse times and different power, on a web equivalent to the web to be micro-perforated.

11. The calibration method according to any preceding claim wherein the virtual space is a bidimensional cartesian virtual space where one axis corresponds to the pulse time of the laser source and the other orthogonal axis corresponds to the real micro-perforation diameter measured on the digital image.

12. The calibration method according to any preceding claim wherein the trendline is calculated through a linear regression.
